# EUROPÄISCHE PATENTSCHRIFT

(11) **EP 1 613 505 B1**
(45) Veröffentlichungstag und Bekanntmachung des Hinweises auf die Patenterteilung: **05.09.2007**
(21) Anmeldenummer: 04719969.0
(22) Anmeldetag: 12.03.2004
(51) Int. Cl.: B60P 1/48

(54) **CONTAINERHANDHABUNGSVORRICHTUNG FÜR EIN CONTAINERTRANSPORTFAHRZEUG**
CONTAINER HANDLING DEVICE FOR A CONTAINER TRANSPORTING VEHICLE
DISPOSITIF DE MANIPULATION DE CONTENEURS POUR VEHICULE DE TRANSPORT DE CONTENEURS

(30) Priorität: 14.03.2003 DE 10311359
(43) Veröffentlichungstag der Anmeldung: 11.01.2006
(73) Patentinhaber: Schaich, Manfred, 88212 Ravensburg (DE)
(72) Erfinder: Schaich, Manfred, 88212 Ravensburg (DE)
(74) Vertreter: Kramer - Barske - Schmidtchen
(86) Internationale Anmeldenummer: PCT/EP2004/002613
(87) Internationale Veröffentlichungsnummer: WO 2004/080754

(56) Entgegenhaltungen:
- DE-A- 10 063 616
- DE-U- 9 306 213
- DE-U- 29 505 271
- PATENT ABSTRACTS OF JAPAN Bd. 1999, Nr. 01, 29. Januar 1999 (1999-01-29) & JP 10 272981 A (TOYO UMPANKI CO LTD), 13. Oktober 1998 (1998-10-13)

## Beschreibung

Die Erfindung betrifft eine Containerhandhabungsvorrichtung für ein Containertransportfahrzeug gemäß dem Oberbegriff des Ansprüche 1 und 2.

Aus dem DE 295 05 271.6 U1 ist eine Containerhandhabungsvorrichtung bekannt, bei der zum Schwenken des Rotationsarms zwischen dem Tragarm und dem Rotationsarm ein Hydraulikzylinder vorgesehen ist, so dass der Rotationsarm relativ zum Verladearm zwischen der maximal verkürzten und der maximal verlängerten Stellung des Hydraulikzylinders um weniger als 180° schwenkbar ist. Diese begrenzte Verschwenkbarkeit erfordert die Ausbildung der Rotationsarme als Teleskoparme, was verhältnismäßig aufwendig ist. Des weiteren ist es nicht möglich, einen an den Enden der Rotationsarme von der Ladeplattform her aufgenommenen Container unmittelbar hinter der Ladeplattform abzusetzen, was zusätzlichen Platzbedarf bedingt.

Aus der DE 100 63 616.0 A1, von der in den Oberbegriffen der nebengeordneten Patentansprüche 1 und 2 ausgegangen wird, ist eine Containerhandhabungsvorrichtung bekannt, bei der der Rotationsarm relativ zum Verladearm nicht nur um mehr als 180° verschwenkbar, sondern zusätzlich in seinem am Ende des Verladearms angeordneten Lagergehäuse längs verschiebbar ist, so dass bezüglich der an beiden Enden des Rotationsarms angeordneten Gehängeaufnahmen relativ zur Ladeplattform ein hohes Maß an Flexibilität besteht, aufgrund derer es insbesondere möglich ist, einen hinter der Ladeplattform abgestellten vollen Container auf die Ladeplattform aufzuladen und einen auf der Ladeplattform mitgebrachten leeren Container unmittelbar hinter der Ladeplattform abzusetzen. Die Ausbildung des Rotationsarms derart, dass er relativ zum Verladearm schwenkbar und in sich längs verschiebbar ist, ist jedoch verhältnismäßig aufwendig.

Die DE 93 06 213 U1 beschreibt einen Ladearm einer Absetzkippeinrichtung, wobei am oberen Ende eines Ladearms ein Schwenkann gelagert ist, an dessen freiem Ende eine Gehängeaufnahme angebracht ist. Die Problematik oder die Möglichkeit, einen vollen Container gegen einen leeren Container bei minimalem Platzbedarf auszutauschen, ist in dieser Druckschrift an keiner Stelle angesprochen.

Die DE 195 26 605 C2 beschreibt eine Containerhandhabungsvorrichtung, bei der an jeder Seite eine Ladeplattform zwei Ladearme konzentrisch zueinander, d.h. bezüglich der Breitenrichtung des Fahrzeuges nebeneinander gelagert sind, wobei einer der Ladearme teleskopisch verlängerbar ist, so dass im ausgefahrenen Zustand des teleskopischen Ladearms unter einem an seinem freien Ende hängenden Container ein am anderen Ladearm hängender Container hindurch bewegt werden kann.

In der GB 1300408 A ist ein Fahrzeug mit einer Ladeplattform beschrieben, auf der zwei Container hintereinander angeordnet werden können, und einer Lade-/Entladeeinrichtung, mit der der jeweils hintere Container abgeladen werden kann und der vordere Container auf die Stelle transportiert werden kann, an der sich der hintere Container normalerweise befindet, so dass auch der vordere Container abgeladen bzw. aufgeladen werden kann,

Der Erfindung liegt die Aufgabe zugrunde, eine in ihrem Aufbau einfache Containerhandhabungvorrichtung zu schaffen, die es gestattet, einen vollen Container gegen einen leeren Container auszutauschen, ohne dass hinter der Ladeplattform zusätzlicher Platz benötigt wird.

Eine erste Lösung dieser Aufgabe wird mit den Merkmalen des Anspruchs 1 erzielt Mit Hilfe der weiteren, am Verladearm angebrachten Gehängeaufnahme ist es möglich, einen leeren Container genau dort abzusetzen, wo ein voller Container aufgenommen wurde, ohne dass das Containertransportfahrzeug während des Austausches der Container bewegt werden muss und ohne dass der Rotationsarm am Verladearm längs verschiebbar angebracht ist.

Eine weitere Lösung der Erfindungsaufgabe wird mit den Merkmalen des Anspruchs 2 erzielt, wobei gegenüber der Ausführungsform gemäß dem Anspruch 1 der zusätzliche Vorteil erzielt wird, dass ein aufgenommener voller Container vor dem Absetzen des leeren Containers nicht aus seiner Gehängeaufnahme gelöst werden muss. Damit gestaltet sich der Transport des vollen Containers zu dessen Entleerstelle komfortabel.

Die Ansprüche 3 bis 5 kennzeichnen vorteilhafte konstruktive Einzelheiten der Containerhandhabungsvorrichtung gemäß dem Anspruch 2.

Mit den Merkmalen der Ansprüche 6 und 7 wird die Einsetzbarkeit der erfindungsgemäßen Handhabungsvorrichtung für unterschiedlichste Arten von Container, auch wenn diese überfüllt sind, erläutert.

Mit den Merkmalen des Anspruchs 8, die in den Ansprüchen 9 und 10 weitergebildet sind, wird erreicht, dass die erfindungsgemäße Containerhandhabungsvorrichtung in Breitenrichtung des Fahrzeuges allenfalls minimal breiter baut als herkömmliche Containerhandhabungsvorrichtungen mit lediglich zwei Verladearmen.

Die Erfindung wird im Folgenden anhand schematischer Zeichnungen beispielsweise und mit weiteren Einzelheiten erläutert.

Es stellen dar:
- Fig. 1 bis 6: Seitenansichten eines Containertransportfahrzeuges in verschiedenen Betriebszuständen einer erfindungsgemäßen Containerhandhabungsvorrichtung,
- Fig. 7: eine Aufsicht auf die Containerhandhabungsvorrichtung gemäß den Fig. 1 bis 6 in deren voll gestrecktem Zustand,
- Fig. 8 und 9: perspektivische Ansichten der Schwenkverbindung zwischen Verladearm und Rotationsarm und
- Fig. 10 bis 15: Seitenansichten einer weiteren Ausführungsform einer erfindungsgemäßen Containerhandhabungsvorrichtung in verschiedenen Betriebszuständen.

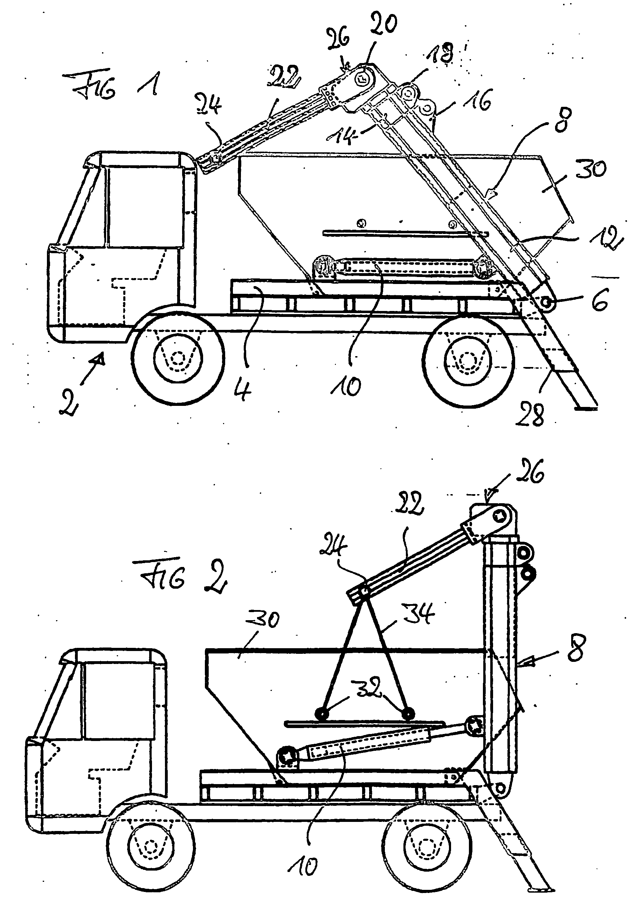

Gemäß Fig. 1 weist ein insgesamt mit 2 bezeichnetes Containertransportfahrzeug eine an sich bekannte Ladeplattform 4 auf, in deren hinterem Bereich an beiden Seiten in an sich bekannter Weise um vorzugsweise gleichachsige Schwenkachsen 6 schwenkbare Verladearme 8 gelagert sind.

Zum Verschwenken jedes Verladearms 8 relativ zur Ladeplattform 4 ist in an sich bekannter Weise ein Hydraulikzylinder 10 vorgesehen, der sich schwenkbar an der Ladeplattform 4 und dem.Verladearm 8 abstützt. In der in Fig. 1 dargestellten Stellung ist der Hydraulikzylinder 10 maximal verkürzt, so dass der Verladearm 8 schräg nach oben gerichtet ist.

Vorzugsweise ist der Verladearm 8 zweiteilig und besteht aus einem unmittelbar an der Ladeplattform 4 gelagertem Grundarm 12 und einem aus dem Grundarm teleskopisch ausfahrbaren Teleskoparm 14, zwischen dem und dem inneren Ende des Grundarms 12 in an sich bekannter Weise ein Hydraulikzylinder wirkt. Am freien Ende des Grundarms 12 und an dem diesem im eingefahrenen Zustand benachbarten Ende des Teleskoparms 14 ist bevorzugt jeweils eine Gehängeaufnahme 16 bzw. 18 vorgesehen.

An dem freien Ende des Teleskoparms 14 ist um eine Schwenkachse 20, die zur Schwenkachse 6 vorzugsweise parallel ist, ein Rotationsarm 22 gelagert, in dessen freiem Endbereich eine weitere Gehängeaufnahme 24 vorgesehen ist.

In dem Verbindungsbereich zwischen Teleskoparm 14 und Rotationsarm 22 ist ein insgesamt mit 26 bezeichneter Rotationsarmantrieb integriert, der beispielhaft weiter unten erläutert wird. Mit Hilfe des Rotationsarmantriebs 26 ist es vorteilhafterweise möglich, den Rotationsarm 22 aus der in Fig. 1 dargestellten Stellung heraus in Gegenuhrzeigerrichtung weitgehend in Anlage an den Verladearm 8 zu verschwenken und in Uhrzeigerrichtung nach rechts über die Schräglage zum Verladeraum hinaus zu verschwenken, so dass der Schwenkwinkel insgesamt mindestens 180°, vorzugsweise 270° beträgt.

In Fig. 1 ist weiter eine an sich bekannte Stützeinrichtung 28 dargestellt, mit der sich das Transportfahrzeug bei der Aufnahme oder dem Absetzen eines Containers 30 am Boden abstützt.

Im Folgenden werden verschiedene Funktions- bzw. Betriebszustände der durch die verschiedenen Arme und deren Antriebe gebildeten Handhabungsvorrichtung erläutert.

Das Fahrzeug kommt beispielsweise mit einem leeren, auf der Ladeplattform 4 befindlichen Container 30 an einer Baustelle an, wobei sich die Arme im Zustand der Fig. 1 oder in einem Zustand befinden, in dem der Rotationsarm 22 an den Verladearm herangeschwenkt ist. Bevor der Betrieb der Handhabungsvorrichtung beginnt, wird die Stützeinrichtung 28 ausgefahren.

Die nachfolgend geschilderten Betriebsabläufe laufen links- und rechtsseitig des Fahrzeuges gleich ab und werden nur für die sichtbare linke Seite des Fahrzeuges beschrieben.

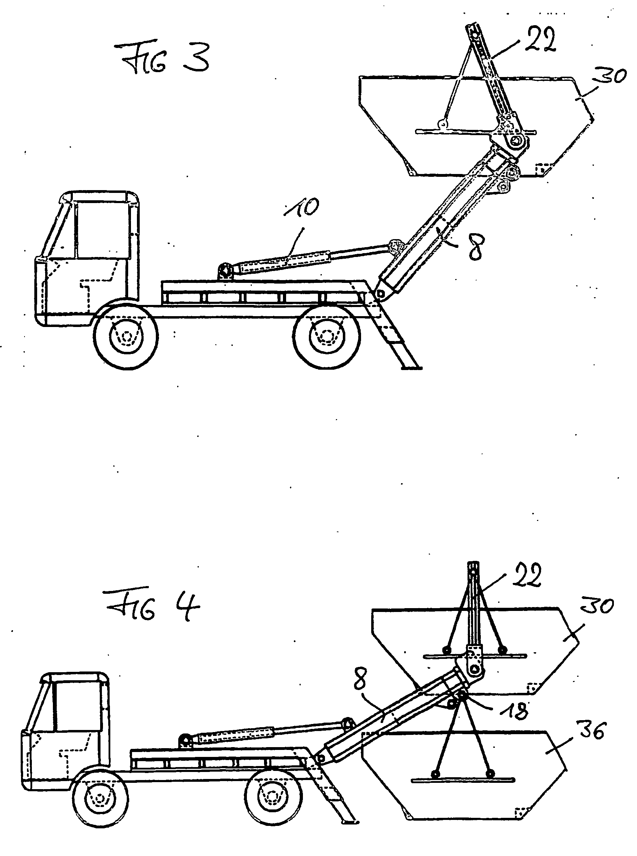

Gem. Fig. 2 wird durch Betätigen des Hydraulikzylinders 10, der einen Verladearmantrieb bildet, der Verladearm 8 in eine etwa senkrechte Stellung geschwenkt. Der Rotationsarm 22 wird mit Hilfe des Rotationsarmantriebes 26 in eine Stellung verschwenkt, in der sich die Gehängeaufnahme 24 etwa mittig über den Gehängepunkten 32 des Containers 30 befindet, so dass ein an sich bekanntes Gehänge 34 angebracht bzw. eingehängt werden kann, mit dem der Container 30 aufgenommen werden kann.

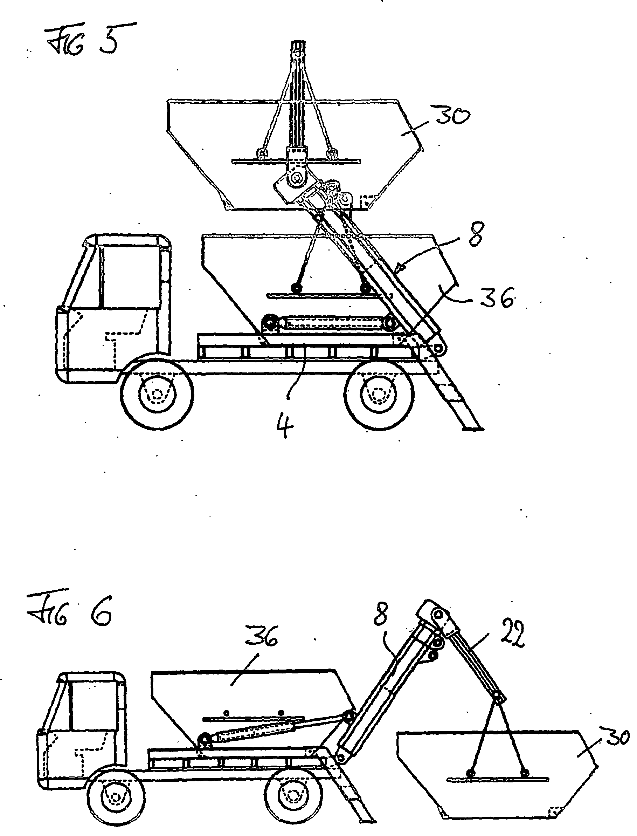

Gem. Fig. 3 wird der angehängte Container 30 unter Verschwenken des Verladearms 8 und des Rotationsarms 22 aufwärts und nach hinten bewegt.

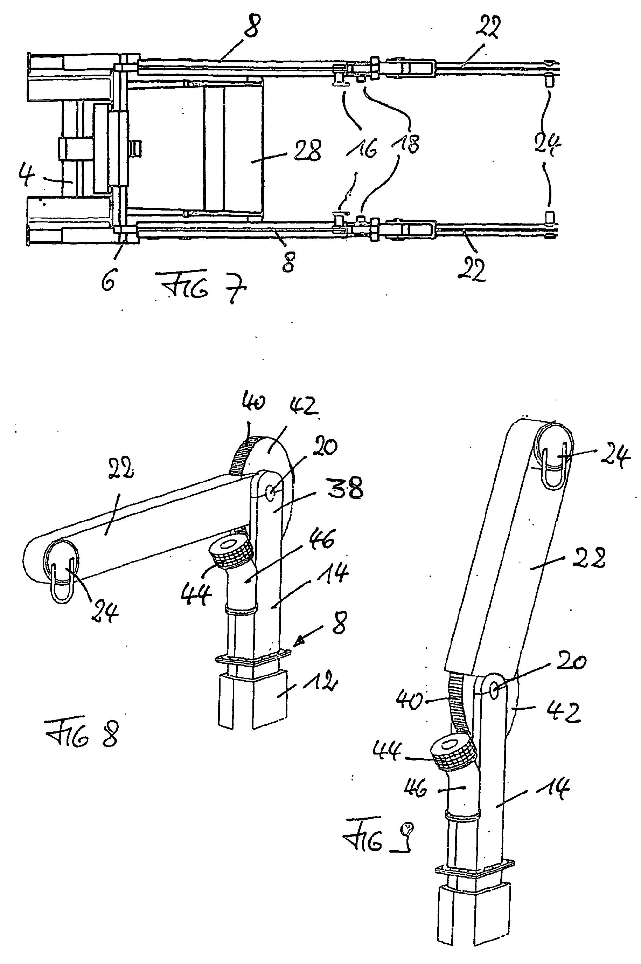

Gem. Fig. 4 gelangt die Gehängeaufnahme 18 des Teleskoparms 14 bei weiterer Verschwenkung des Verladearms 8 über einen weiteren Container 36, der hinter dem Fahrzeug abgestellt ist und abtransportiert werden soll. Der Container 36 wird mittels eines weiteren Gehänges an der Gehängeaufnahme 18 eingehängt. Der Container 30 befindet sich in Folge der entsprechenden Schwenkstellung des Rotationsarms 22 in ausreichendem Abstand über den Container 36.

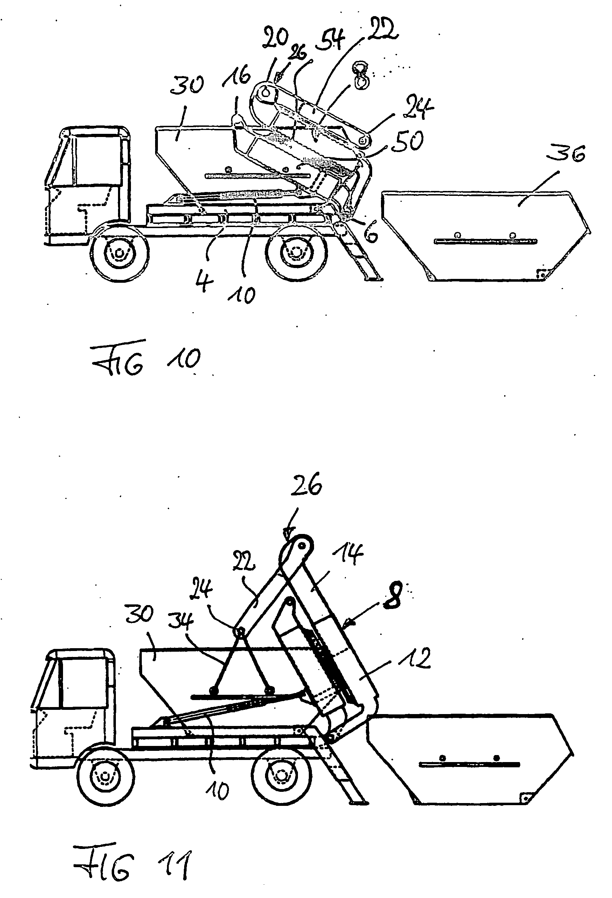

Gem. Fig. 5 wird anschließend der Verladearm 8 in Gegenuhrzeigerrichtung verschwenkt, so dass der Container 36 auf die Ladeplattform 4 gelangt und dort nach Absetzen von der Gehängeaufnahme 18 gelöst werden kann.

Anschließend wird unter erneutem Verschwenken des Verladearms 8 in Uhrzeigerrichtung und Verschwenken des Rotationsarms 22 in Uhrzeigerrichtung der Container 30 hinter dem Fahrzeug abgesetzt.

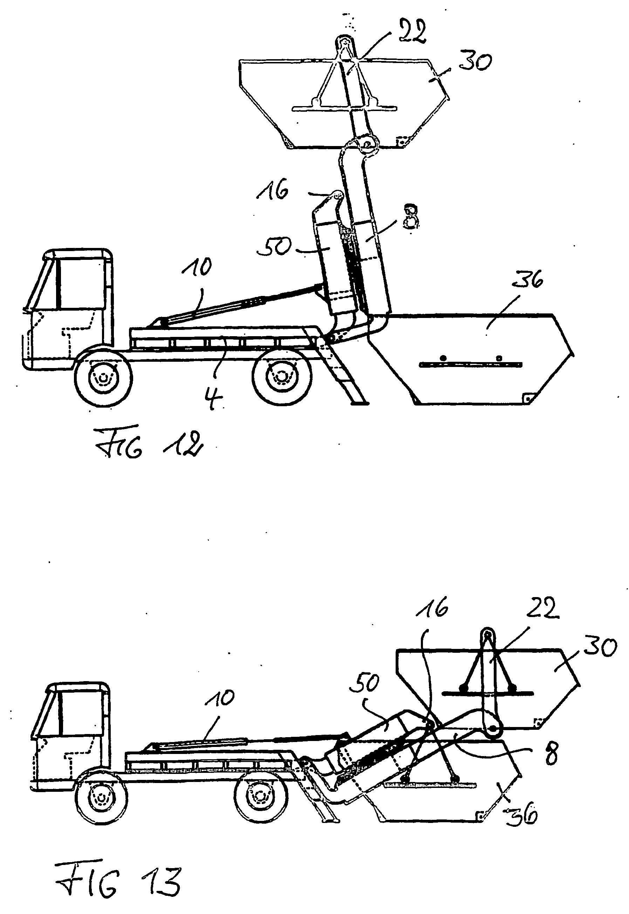

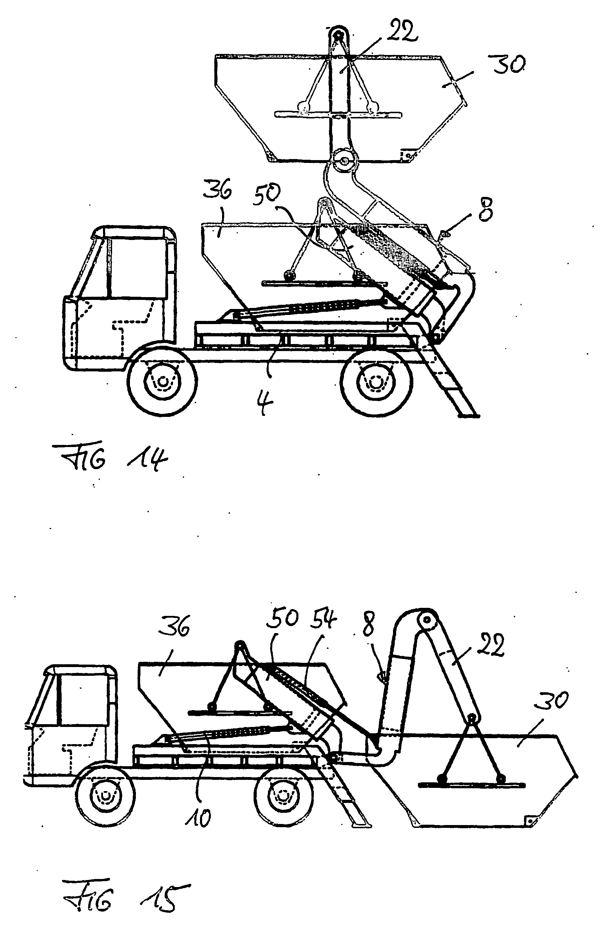

Fig. 7 zeigt die beschriebene Handhabungsvorrichtung in Aufsicht und in maximal nach hinten ausgefahrener Stellung. Die beiden Verladearme 8 sind an der Ladeplattform 4 in einer gemeinsamen Schwenkachse 6 gelagert.

Die Lagerung des Rotationsarms 22 an den Teleskoparm 14 ist in den Fig. 8 und 9 dargestellt, die unterschiedliche Schwenkwinkel des Rotationsarms 22 zeigen.

Der Teleskoparm 14 endet in zwei Schenkeln 38 (nur eine sichtbar), die eine Lagergabel bzw. einen Lagerbock bilden und an denen mit der Lagerachse 20 ein mit einer Außenverzahnung versehenes Tragrad 42 gelagert ist, das zwischen den Schenkeln. 38 angeordnet ist und mit dem Rotationsarm 22 starr bzw. einteilig verbunden ist. In den Fig. ist weiter die am freien Ende des Rotationsarms 22 vorgesehene Gehängeaufnahme 24 sichtbar, die einen an dem Rotationsarm drehbar gelagerten Bügel umfasst.

Mit der Außenverzahnung 40 des Tragrades 42 kämmt ein Ritzel 44, das von einem an dem Teleskoparm 14 befestigten Hydraulikmotor 46 drehangetrieben ist. Der Hydraulikmotor 46 kann beispielsweise als ein Axialkolbenmotor ausgebildet sein, der über an sich bekannte Hydraulikmittelverbindungen (Schlauchleitungen, in die Arme integrierte Nuten mit Schiebe- und Drehverbindungen usw.) von einer nicht dargestellten Pumpe her mit Hydraulikdruck versorgt wird. Die Verzahnungen zwischen dem Ritzel 44 und dem Tragrad 42 sind beispielsweise selbsthemmende Schneckenverzahnungen, so dass ein Verschwenken des Rotationsarms 22 nur durch positiven Antrieb des Hydraulikmotors 46 möglich ist.

Wie ersichtlich, wird mit der beschriebenen Konstruktion ein großer Schwenkwinkel (mehr als 270°) des Rotationsarms 22 relativ zum Verladearm 8 erzielt, ohne dass die zur Aufnahme von Containern verfügbare Breite zwischen den Armen beeinträchtigt wird.

Es versteht sich dass der Schwenkantrieb für den Rotationsarm in vielfältiger Weise abgeändert werden kann, beispielsweise durch einen Elektroantrieb gebildet sein kann, mit gegenüber der dargestellten axialen Außenverzahnung des Tragrades und Schneckenverzahnung des Ritzels unterschiedlichem Rahmenprofil oder auch in Form zweiter Hydraulikzylinderantriebe ausgebildet sein kann, die mit unterschiedlichem Totpunkt zwischen dem Rotationsarm und dem Teleskoparm wirken, so dass eine Verschwenkbarkeit um mehr als 180° erzielt wird.

Durch die Anordnung einer Gehängeaufnahme 18 an dem freien Endbereich des Teleskoparms 14, einer weiteren Gehängeaufnahme 16 am freien Ende des Grundarms 12 und der Gehängeaufnahme 24 am freien Ende des Rotationsarms 22, durch die große Verschwenkbarkeit des Rotationsarms 22 und die teleskopische Ausfahrbarkeit des Tragarms 14 wird eine außerordentlich variable Kinematik der Handhabungsvorrichtung erzielt, die einen Austausch von Containern bei kleinstem Raumbedarf ermöglicht.

Anhand der Fig. 1 bis 6 wurde die Funktion der Handhabungsvorrichtung unter Verwendung der Gehängeaufnahmen 18 und 24 beschrieben, deren gegenseitiger Abstand unabhängig von der Stellung des Teleskoparms 14 ist und sich abhängig von der Schwenkstellung des Rotationsarms 22 nur entsprechend dem Abstand zwischen der Achse 20 und der Gehängeaufnahme 18 ändert.

Die am Grundarm vorgesehene Gehängeaufnahme 18 kann vorteilhafterweise für einen abzuholenden, in seiner Höher überladenen Container verwendet werden, der an ein zusätzliches Ladgeschirr bzw. Gehänge angehängt wird. Der andere, an der Gehängeaufnahme 24 hängende Container kann durch Ausfahren des Teleskoparms 14 dann entsprechend angehoben werden.

Es versteht sich, dass zur Steuerung der Antriebe beispielsweise eine programmgesteuerte Bedieneinheit vorgesehen sein kann, mit dem sich die jeweiligen Gehängeaufnahmen rasch und komfortabel in jeweilige Aufnahme- und Absätzestellung für die jeweiligen Container bewegen lassen.

In einer vereinfachten Ausführungsform kann der Verladearm 8 nicht teleskopisch ausgebildet sein, wobei an seinem freien Endbereich nur eine Gehängeaufnahme vorgesehen ist. Die beschriebene Vorrichtung kann hinsichtlich der Antriebe und zahlreicher konstruktiver Details in vielfältiger Weise abgeändert werden. Der Rotationsarm 22 kann als Teleskoparm ausgebildet sein.

Bei der vorgenannten Ausführungsform der Containertransportvorrichtung musste der volle aufgenommen Container und auf der Ladeplattform abgestellte Container von der zugehörigen Gehängeaufnahme abgenommen werden (Fig. 5), bevor der neue Container 30 abgesetzt werden kann (Fig. 6). Bei bestimmten Containermaßen und Nutzung der teleskopischen Ausfahrbarkeit ist dies zwar nicht zwingend erforderlich, jedoch ist dieses Aushängen des vollen Containers bei manchen Anwendungsgebieten nicht auszuschließen.

Anhand der Fig. 10 bis 15 wird im Folgenden eine weitere Ausführungsform einer Containerhandhabungsvorrichtung erläutert, bei der ein voller aufgenommener Container nicht abgehängt werden muss, bevor ein neuer Container abgesetzt werden kann.

Fig. 10 zeigt den Ruhezustand, den die Handhabungsvorrichtung einnimmt, wenn ein neuer Container 30 angeliefert wird. Für funktionsähnliche Bauteile werden die gleichen Bezugszeichen verwendet, wie bei der vorgeschilderten Ausführungsform.

Gem. Fig. 10 ist bei dieser Ausführungsform der Handhabungsvorrichtung der Verladearm 8 an seinem unteren Ende abgebogen und um die Schwenkachse 6 schwenkbar an der Ladeplattform 4 gelagert. Das freie Ende des Verladearms 8, der vorteilhafterweise wie bei der vorhergehenden Ausführungsform als Teleskoparm ausgebildet ist, ist insgesamt gegensinnig abgebogen, so dass der Verladearm 8 insgesamt S-förmig ist. Am freien Ende des Verladearms 8 ist ähnlich wie bei der vorhergehenden Ausführungsform um die Lagerachse 20 der Rotationsarm 22 mittels eines Rotationsarmantriebs 26, der ähnlich wie der der Fig. 8 und 9 ausgebildet ist, um mehr als 180°, vorzugsweise 270° schwenkbar gelagert. An seinem freien Ende weist der Rotationsarm 22 eine Gehängeaufnahme 24 auf.

Im Unterschied zur vorgenannten Ausführungsform ist vorzugsweise um die gleiche Schwenkachse 6 an der Ladeplattform 4 schwenkbar ein Innenverladearm 50 gelagert, der in Folge der Abbiegung des Verladearms 8 in geringen Abstand zum Verladearm 8 anordenbar ist. An seinem freien Ende weist der Innenverladearm 50 eine Gehängeaufnahme 16 auf. Zum Verschwenken des Innenverladearms 50 relativ zur Ladeplattform dient ein Hydraulikzylinder 10. Zum Verschwenken des Verladearms 8 relativ zum Innenverladearm 50 dient ein weiterer zwischen den beiden Armen wirksamer Hydraulikzylinder 54.

Die Fig. 10 zeigt den Ruhezustand der Handhabungsvorrichtung, in dem die Arme 50, 8 und 22 in enger gegenseitiger Anlage bzw. engen gegenseitigen Abstand sind. Im Zustand der Fig. 10 fährt das Fahrzeug mit einem leeren Container 30 eine Baustelle an und hält unmittelbar vor einem abzutransportierenden Container 32.

Die Handhabungsvorrichtung wird nun in Betrieb genommen, wobei die beiden Arme 50 und 8 durch Betätigen des Hydraulikzylinders 10 aufgerichtet werden und der Rotationsarm 22 mittels des Rotationsarmantriebs 26 in Gegenuhrzeigerrichtung verschwenkt wird, so dass die Gehängeaufnahme 24 über den Container 30 gelangt und dieser mittels des Gehänges 34 eingehängt werden kann. Wie ersichtlich, wird dabei der Teleskoparm 14 in zweckentsprechender Weise leicht aus dem Grundarm 12 herausgefahren.

Im weiteren Verlauf werden gem. Fig. 12 die Arme 50 und 8 weiter aufgerichtet und der Rotationsarm 22 verschwenkt, so dass der Container 30 angehoben wird.

Unter weiterem Verschwenken der Arme 50 und 8 (Fig. 13) und gegensinnigem Verschwenken des Rotationsarms 22 gelangt dann die Gehängeaufnahme 16 des Innenarms 50 über den abzutransportierenden Container 36, so dass dieser mittels eines weiteren Gehänges an den Innenverladearm 50 angehängt werden kann.

Die beiden Arme 50 und 8 werden anschließend in Gegenuhrzeigerrichtung verschwenkt, wobei der Rotationsarm 22 aufgerichtet wird (Fig. 14), so dass der abzutransportierende, volle Container 36 auf der Ladeplattform 4 abgesetzt werden kann.

Anschließend wird der Verladearm 8 mittels des Hydraulikzylinders 54 in Uhrzeigerrichtung (Fig. 15) verschwenkt, wobei der Innenverladearm 50 seine Stellung beibehält, so dass der auf der Ladeplattform 4 abgesetzte Container 36 nicht von dem Innenarm 50 abgehängt werden muss. Die Verschwenkung des Verladearms 8 und die zugehörige zweckentsprechende Verschwenkung des Rotationsarms 22 dauern an, bis der neue Container 30 hinter dem Fahrzeug abgesetzt werden kann. Nach Abnahme seines Gehänges wird der Verladearm 8 an den Innenarm 50 zurückgeschwenkt und der Rotationsarm 22 an den Verladearm 8 herangeschwenkt, so dass wiederum die Stellung gem. Fig. 10 erreicht wird, in der der Container 36 abtransportiert werden kann.

Gegenüber der vorhergehenden Ausführungsform ist es mit der Ausführungsform gem. den Fig. 10 bis 15 nicht erforderlich, den vollen, abzutransportierenden Container, vor dem Absetzen des neuen Containers 30 abzuhängen, was den Betrieb vor Ort komfortabler macht.

Die einzelnen Antriebe, wie Hydraulikzylinder 10, Hydraulikzylinder 54, Rotationsarmantrieb 26, Teleskoparmantrieb innerhalb des Verladearms 8 sowie bei gegebenenfalls teleskopischer Ausbildung des Innenverladearms 50 dessen Teleskoparmantrieb, werden mittels eines Steuergerätes bedient, das bei vollständig hydraulischem Antrieb entsprechende Steuerventile ansteuert, so dass die Handhabungsvorrichtung komfortable und sicher bedienbar ist. Die Betätigung der an den beiden Seiten der Ladeplattform vorgesehen Antriebe kann unterschiedlich sein, wodurch ein Container schräg abgestellt oder aufgenommen werden kann.

Es versteht sich, dass auch bei der Ausführungsform gem. den Fig. 10 und 15 zahlreiche Abänderungen bezüglich des Antriebs, des Fehlens der teleskopischen Ausbildung usw. möglich sind.

### Bezugszeichenliste

- 2: Containertransportfahrzeug
- 4: Ladeplattform
- 6: Schwenkachse
- 8: Verladearm
- 10: Hydraulikzylinder
- 12: Grundarm
- 14: Teleskoparm
- 16: Gehängeaufnahme
- 18: Gehängeaufnahme
- 20: Lagerachse
- 22: Rotationsarm
- 24: Gehängeaufnahme
- 26: Rotationsarmantrieb
- 28: Stützeinrichtung
- 30: Container
- 32: Gehängepunkte
- 34: Gehänge
- 36: Container
- 38: Schenkel
- 40: Außenverzahnung
- 42: Tragrad
- 44: Ritzel
- 46: Hydraulikmotor
- 50: Innenverladearm
- 54: Hydraulikzylinder

## Patentansprüche

1. Containerhandhabungsvorrichtung für ein Containertransportfahrzeug, welche Containerhandhabungsvorrichtung enthält
- beidseitig einer Ladeplattform (4) je einen in deren hinterem Bereich gelagerten und mittels je eines Verladearmantriebs (10) schwenkbaren Verladearm (8),
- einen im Bereich des freien Endes jedes Verladearms (8) um eine zur Schwenkachse (6) des Verladearms (8) etwa parallele Schwenkachse (20) schwenkbar gelagerten Rotationsarm (22),
- eine im Bereich des freien Endes jedes Rotationsarms (22) angeordnete Gehängeaufnahme (24) zum Einhängen des Gehänges-eines auf der Ladeplattform (4) befindlichen Containers (30),
- je einen Rotationsarmantrieb (26) zum Verschwenken je eines Rotationsarms (22) relativ zum zugehörigen Verladearm (8) zwischen einer ersten Stellung zur Aufnahme eines auf der Ladeplattform (4) befindlichen Containers (30) an der Gehängeaufnahme (24) des Rotationsarms (22) und einer zweiten Stellung zum Absetzen dieses Containers (30) hinter dem Fahrzeug,
wobei jeder Rotationsarm (22) mittels des zugehörigen Rotationsarmantriebs (26) um mehr als 180°, vorzugsweise etwa 270°, schwenkbar ist, wobei der Rotationsarm (22) sich in der zweiten Stellung vom bezogen auf die Ladeplattform (4) schräg nach hinten und oben gerichteten Verladearm (8) aus schräg nach hinten und abwärts erstreckt,
**dadurch gekennzeichnet,**
**dass** die Vorrichtung weiter eine an jedem Verladearm (8) in Abstand von dessen Schwenkachse (6) angeordnete weitere Gehängeaufnahme (16; 18) enthält, zum Einhängen, in einer bestimmten Stellung der Vorrichtung, des Gehänges eines weiteren Containers (36), der hinter dem Fahrzeug abgestellt ist, und dass,
die Vorrichtung so ausgeführt ist, dass die zweite Stellung erreichbar ist, nachdem der, durch die weitere Gehängeaufnahme (16; 18) aufgenommene weitere Container (36) auf der Ladeplattform (4) abgesetzt wurde.

2. Containerhandhabungsvorrichtung für ein Containertransportfahrzeug, welche Containerhandhabungsvorrichtung enthält
- beidseitig einer Ladeplattform (4) je einen in deren hinterem Bereich gelagerten und mittels je eines Verladearmantriebs (10) schwenkbaren Verladearm (8),
- einen im Bereich des freien Endes jedes Verladearms (8) um eine zur Schwenkachse (6) des Verladearms (8) etwa parallele Schwenkachse (20) schwenkbar gelagerten Rotationsarm (22),
- eine im Bereich des freien Endes jedes Rotationsarms (22) angeordnete Gehängeaufnahme (24) zum Einhängen des Gehänges eines auf der Ladeplattform (4) befindlichen Containers (30), und
- je einen Rotationsarmantrieb (26) zum Verschwenken je eines Rotationsarms (22) relativ zum zugehörigen Verladearm (8) zwischen einer ersten Stellung zur Aufnahme eines auf der Ladeplattform (4) befindlichen Containers (30) an der Gehängeaufnahme (24) des Rotationsarms (22) und einer zweiten Stellung zum Absetzen dieses Containers (30) hinter dem Fahrzeug, wobei jeder der Rotationsarme (22) mittels des zugehörigen Rotationsantriebs (26) um mehr als 180°, vorzugsweise etwa 270°, schwenkbar ist und sich in der zweiten Stellung vom bezogen auf die Ladeplattform (4) schräg nach hinten und oben gerichteten Verladearm (8) aus abwärts erstreckt,
**dadurch gekennzeichnet, dass**
in der Schwenkebene jedes Verladearms (8) beweglich an dessen der Ladeplattform (4) zugewandter Seite ein Innenverladearm (50) um eine zur Schwenkachse (6) des Verladearms (8) parallele Schwenkachse an der Ladeplattform gelagert und mittels eines Innenverladearmantriebs (10) schwenkbar ist, und
im Bereich des freien Endes des Innenverladearms eine weitere Gehängeaufnahme (16) zum Einhängen, in einer bestimmten Stellung der Vorrichtung, eines weiteren hinter der Ladeplattform (4) abgestellten Containers (36) angeordnet ist, welcher, durch die weitere Gehängeaufnahme (16) aufgenommene weitere Container (36) nach Verschwenken des Innenverladearms (50) auf der Ladeplattform absetzbar ist.

3. Containerhandhabungsvorrichtung nach Anspruch 2, **dadurch gekennzeichnet, dass** der Verladearmantrieb (10) einen zwischen dem Verladearm (8) und dem Innenverladearm (50) wirksamen Hydraulikzylinder (54) enthält.

4. Containerhandhabungsvorrichtung nach Anspruch 2 oder 3, **dadurch gekennzeichnet, dass** der Verladearm (8) und der lnnenverladearm (50) um eine gemeinsame Schwenkachse (6) schwenkbar gelagert sind.

5. Containerhandhabungsvorrichtung nach einem der Ansprüche 2 bis 4, **dadurch gekennzeichnet, dass** der Rotationsarm (22), der Verladearm (8) und der Innenverladearm (50) in eine Ruhestellung schwenkbar sind, in der sie unter weitgehender gegenseitiger Annäherung etwa parallel zueinander angeordnet sind.

6. Containerhandhabungsvorrichtung nach einem der Ansprüche 1 bis 5, **dadurch gekennzeichnet, dass** der Verladearm (8) einen an der Ladeplattform (4) gelagerten Grundarm (12) und einen aus diesem ausfahrbaren Teleskoparm (14) aufweist, an dem der Rotationsarm (22) gelagert ist und der Rotationsarmantrieb (26) angebracht ist.

7. Containerhandhabungsvorrichtung nach Anspruch 6, **dadurch gekennzeichnet, dass** am freien Endbereich des Grundarms (12) und am freien Endbereich des Teleskoparms (14) je eine Gehängeaufnahme (16,18) angeordnet ist.

8. Containerhandhabungsvorrichtung nach einem der Ansprüche 1 bis 7, **dadurch gekennzeichnet, dass** der Verladearm (8) an seinem freien Ende in zwei Schenkeln endet, an denen ein zwischen den Schenkeln (38) angeordnetes, mit einer Außenverzahnung (40) versehenes Tragrad (42) gelagert ist, das starr mit dem Rotationsarm (22) verbunden ist und mit einem am Endbereich des Verladearms (8) angeordneten, drehantreibbaren Antriebsritzel (44) in Eingriff ist.

9. Containerhandhabungsvorrichtung nach Anspruch 8, **dadurch gekennzeichnet, dass** das Antriebsritzel (44) von einem Hydraulikmotor (46) antreibbar ist.

10. Containerhandhabungsvorrichtung nach Anspruch 8 oder 9, **dadurch gekennzeichnet, dass** der Eingriff zwischen Antriebsritzel (44) und Tragrad (42) selbsthemmend ist.

## Claims

1. Container handling device for a container transport vehicle, which container handling device comprises:
- loading arms (8), each being pivotable by means of a respective loading arm drive (10), each loading arm (8) being respectively supported on the two sides of the rear portion of a loading platform (4),
- a rotatable arm (22) supported in the area of the free end of each loading arm (10) so as to be pivotable about a pivot axis (20) that is approximately parallel to the pivot axis (6) of the loading arm (8),
- a suspension holding means (24) disposed in the area of the free end of each rotatable arm (22) for supporting the suspension of a container (30) located on the loading platform (4),
- respective rotational arm drives (26) for pivoting each respective rotatable arm (22) relative to its associated loading arm (8) between a first position for picking-up a container (30) located on the loading platform (4) with the suspension holding means (24) of the rotatable arm (22) and a second position for depositing the container (30) behind the vehicle,
wherein each rotatable arm (22) is pivotable by means of the associated rotatable arm drive (26) around more than 180°, preferably approximately 270°, wherein in the second position the rotatable arm (22) extends, relative to the loading platform (4), obliquely-rearward and downward from the obliquely-rearwardly- and upwardly-oriented loading arm (8),
**characterized in that**
the device further comprises a further suspension holding means (16; 18) disposed on each loading arm (8) at a distance from their respective pivot axes (6) for supporting the suspension of a further container (36) that is set behind the vehicle, and
the device is formed so that the second position is reachable after the further container (36), which has been picked-up by the further suspension holding means (16; 18), has been deposited on the loading platform (4).

2. Container handling device for a container transport vehicle, which container handling device comprises:
- loading arms (8), each being pivotable by means of a respective loading arm drive (10), each loading arm (8) being respectively supported on the two sides of the rear portion of a loading platform (4),
- a rotatable arm (22) supported in the area of the free end of each loading arm (8) so as to be pivotable about a pivot axis (20) that is approximately parallel to the pivot axis (6) of the loading arm (8),
- a suspension holding means (24) disposed in the area of the free end of each rotatable arm (22) for supporting the suspension of a container (30) located on the loading platform (4),
- respective rotational arm drives (26) for pivoting each respective rotatable arm (22) relative to its associated loading arm (8) between a first position for picking-up a container (30) located on the loading platform (4) with the cable suspension retainer (24) of the rotatable arm (22) and a second position for depositing the container (30) behind the vehicle,
wherein each of the rotatable arms (22) is pivotable by means of the associated rotatable arm drive (26) around more than 180°, preferably approximately 270°, and in the second position, each extends downward from the upwardly-oriented loading arm (8), which is obliquely-rearwardly- and upwardly-oriented relative to the loading platform (4),
**characterized in that**
an inner loading arm (50) is supported in the pivot plane of each loading arm (8) on each side thereof facing the loading platform (4) so as to be movable about a pivot axis that is parallel to the pivot axis (6) of the loading arm (8) and is pivotable by means of an inner loading arm drive (10), and
a further suspension holding means (16) is disposed in the area of the free end of the inner loading arm for supporting, in a certain position of the device, a further container (36), which is set behind the loading platform (4), which further container (36), which has been picked-up by the further suspension holding means (16), can be deposited on the loading platform after pivoting the inner loading arm (50).

3. Container handling device according to claim 2, **characterized in that** the loading arm drive (10) comprises a hydraulic cylinder (54) acting between the loading arm (8) and the inner loading arm (50).

4. Container handling device according to claim 2 or 3, **characterized in that** the loading arm (8) and the inner loading arm (50) are pivotably supported about a common pivot axis (6).

5. Container handling device according to one of claims 2 to 4, **characterized in that** the rotatable arm (22), the loading arm (8) and the inner loading arm (50) are pivotable into a resting position, in which they are disposed essentially parallel to each other in a substantially converged manner.

6. Container handling device according to one of claims 1 to 5, **characterized in that** the loading arm (8) includes a base arm (12) supported on the loading platform (4) and a telescoping arm (14) extendable therefrom, on which telescoping arm (14) the rotatable arm (22) is supported and the rotatable arm drive (26) is mounted.

7. Container handling device according to claim 6, **characterized in that** a suspension holding means (16, 18) is disposed at each of the free end area of the base arm (12) and the free end area of the telescoping arm (14).

8. Container handling device according to one of claims 1 to 7, **characterized in that** the free end of the loading arm (8) ends in two legs, on which ends a support wheel (42) is supported, which support wheel (42) is disposed between the legs and is provided with outer gear teeth (40), the support wheel (42) being rigidly connected with the rotatable arm (22) and meshing with a rotatably-drivable pinion gear (44) disposed at an end area of the loading arm (8).

9. Container handling device according to claim 8, **characterized in that** the pinion gear (44) is drivable by a hydraulic motor (46).

10. Container handling device according to claim 8 or 9, **characterized in that** the meshing between the pinion gear (44) and the support wheel (42) is self-locking.

## Revendications

1. Dispositif de manutention de conteneurs pour un véhicule de transport de conteneurs, ledit dispositif de manutention de conteneurs comprenant :
- un bras de manipulation (8) respectif sur chaque côté d'une plate-forme de chargement (4), monté dans la zone postérieure de ladite plate-forme et capable de pivoter au moyen d'un entraînement du bras de manipulation (10) respectif,
- un bras rotatif (22) monté dans la zone de l'extrémité libre de chaque bras de manipulation (8) avec possibilité de pivotement autour d'un axe de pivotement (20) approximativement parallèle à l'axe de pivotement (6) du bras de manipulation (8),
- un récepteur de balancelle (24) agencé dans la zone de l'extrémité libre de chaque bras rotatif (22) pour accrocher la balancelle d'un conteneur (30) qui se trouve sur la plate-forme de chargement (4),
- un entraînement du bras rotatif (26) respectif pour faire pivoter un bras rotatif (22) respectif par rapport au bras de manipulation (8) associé entre une première position pour recevoir un conteneur (30) qui se trouve sur la plate-forme de chargement (4) au niveau du récepteur de balancelle (24) du bras rotatif (22), et une seconde position pour déposer ce conteneur (30) en arrière du véhicule,
dans lequel chaque bras rotatif (22) est capable de pivoter au moyen de l'entraînement du bras rotatif (26) associé sur plus de 180°, de préférence environ 270°, de sorte que dans la seconde position du bras de manipulation (8) dirigé, par référence à la plate-forme de chargement (4), en oblique vers l'arrière et vers le haut, le bras rotatif (22) s'étend en oblique vers l'arrière et vers le bas,
**caractérisé en ce que**
le dispositif comprend en outre un second récepteur de balancelle (16 ; 18) agencé sur chaque bras de manipulation (8) et à distance de son axe de pivotement (6), pour accrocher, dans une position déterminée du dispositif, la balancelle d'un second conteneur (36) qui est déposé derrière le véhicule, et **en ce que**,
le dispositif est ainsi réalisé que la seconde position peut être atteinte après que le second conteneur (36) reçu au moyen du second récepteur de balancelle (16 ; 18) a été déposé sur la plate-forme de chargement (4).

2. Dispositif de manutention de conteneurs pour véhicules de transport de conteneurs, ledit dispositif de manutention de conteneurs comprenant :
- un bras de manipulation (8) respectif sur chaque côté d'une plate-forme de chargement (4), monté dans la zone postérieure de ladite plate-forme et capable de pivoter au moyen d'un entraînement du bras de manipulation (10) respectif,
- un bras rotatif (22) monté dans la zone de l'extrémité libre de chaque bras de manipulation (8) avec possibilité de pivotement autour d'un axe de pivotement (20) approximativement parallèle à l'axe de pivotement (6) du bras de manipulation (8),
- un récepteur de balancelle (24) agencé dans la zone de l'extrémité libre de chaque bras rotatif (22) pour accrocher la balancelle d'un conteneur (30) qui se trouve sur la plate-forme de chargement (4),
- un entraînement du bras rotatif (26) respectif pour faire pivoter un bras rotatif (22) respectif par rapport au bras de manipulation (8) associé entre une première position pour recevoir un conteneur (30) qui se trouve sur la plate-forme de chargement (4) au niveau du récepteur de balancelle (24) du bras rotatif (22), et une seconde position pour déposer ce conteneur (30) en arrière du véhicule,
dans lequel chaque bras rotatif (22) est capable de pivoter au moyen de l'entraînement du bras rotatif (26) associé sur plus de 180°, de préférence environ 270°, de sorte que dans la seconde position du bras de manipulation (8) dirigé, par référence à la plate-forme de chargement (4), en oblique vers l'arrière et vers le haut, le bras rotatif (22) s'étend en oblique vers l'arrière et vers le bas,
**caractérisé en ce que**
dans le plan de pivotement de chaque bras de manipulation (8), un bras de manipulation intérieur (50) est monté sur la plate-forme de chargement, mobile sur le côté du bras de manipulation tourné vers la plate-forme de chargement (4), capable de pivoter autour d'un axe de pivotement parallèle à l'axe de pivotement (6) du bras de manipulation (8) au moyen d'un entraînement du bras de manipulation intérieur (10), et
dans la zone de l'extrémité libre du bras de manipulation intérieur est agencé un second récepteur de balancelle (16) pour accrocher, dans une position déterminée du dispositif, un second conteneur (36) déposé en arrière de la plate-forme de chargement (4), ledit second conteneur (36) reçu par le second récepteur de balancelle (16) pouvant être déposé sur la plate-forme de chargement après pivotement du bras de manipulation intérieur (50).

3. Dispositif de manutention de conteneurs selon la revendication 2, **caractérisé en ce que** l'entraînement du bras de manipulation (10) comprend un vérin hydraulique (54) actif entre le bras de manipulation (8) et le bras de manipulation intérieur (50).

4. Dispositif de manutention de conteneurs selon la revendication 2 ou 3, **caractérisé en ce que** le bras de manipulation (8) et le bras de manipulation intérieur (50) sont montés en pivotement autour d'un axe de pivotement commun (6).

5. Dispositif de manutention de conteneurs selon l'une des revendications 2 à 4, **caractérisé en ce que** le bras rotatif (22), le bras de manipulation (8) et le bras de manipulation intérieur (50) sont capables de pivoter jusque dans une position de repos dans laquelle ils sont agencés approximativement parallèlement les uns aux autres avec un large rapprochement mutuel.

6. Dispositif de manutention de conteneurs selon l'une des revendications 1 à 5, **caractérisé en ce que** le bras de manipulation (8) comprend un bras de base (12) monté sur la plate-forme de chargement (4) et un bras télescopique (14) déployable à partir de celui-ci, sur lequel sont montés le bras rotatif (22) et l'entraînement du bras rotatif (26).

7. Dispositif de manutention de conteneurs selon la revendication 6, **caractérisé en ce qu'**un récepteur de balancelle respectif (16, 18) est agencé dans la zone d'extrémité libre du bras de base (12) et dans la zone d'extrémité libre du bras télescopique (14).

8. Dispositif de manutention de conteneurs selon l'une des revendications 1 à 7, **caractérisé en ce que** le bras de manipulation (8) se termine à son extrémité libre par deux branches sur lesquelles est montée une roue porteuse (42), agencée entre les branches (38) et pourvue d'une denture extérieure (40), ladite roue étant reliée rigidement au bras rotatif (22) et étant en engrènement avec un pignon d'entraînement (44) entraîné en rotation et agencé dans la zone d'extrémité du bras de manipulation (8).

9. Dispositif de manutention de conteneurs selon la revendication 8, **caractérisé en ce que** le pignon d'entraînement (44) est susceptible d'être entraîné par un moteur hydraulique (46).

10. Dispositif de manutention de conteneurs selon la revendication 8 ou 9, **caractérisé en ce que** l'engrènement entre le pignon d'entraînement (44) et la roue porteuse (42) est autobloquant.
